# EUROPEAN PATENT SPECIFICATION

(11) **EP 4 278 706 B1**
(45) Date of publication and mention of the grant of the patent: **28.01.2026**
(21) Application number: 21840395.4
(22) Date of filing: 08.12.2021
(51) Int. Cl.: H04W 48/18, H04W 4/90

(54) **NETWORK SELECTION IN A SERVICE INTERRUPTION SCENARIO**
NETZWERKAUSWAHL IN EINEM DIENSTUNTERBRECHUNGSSZENARIO
SÉLECTION DE RÉSEAU DANS UN SCÉNARIO D'INTERRUPTION DE SERVICE

(30) Priority: 12.01.2021 GR 20210100022
(43) Date of publication of application: 22.11.2023
(73) Proprietor: QUALCOMM INCORPORATED, San Diego, California 92121-1714 (US)
(72) Inventor: CHAPONNIERE, Lenaig Genevieve, San Diego, California 92121-1714 (US); ZISIMOPOULOS, Haris, San Diego, California 92121-1714 (US); CATOVIC, Amer, San Diego, California 92121-1714 (US); KANAMARLAPUDI, Sitaramanjaneyulu, San Diego, California 92121-1714 (US); SPEICHER, Sebastian, San Diego, California 92121-1714 (US); KIM, Sunghoon, San Diego, California 92121-1714 (US); ZIA, Waqar, San Diego, California 92121-1714 (US)
(74) Representative: Bardehle Pagenberg Partnerschaft mbB Patentanwälte Rechtsanwälte
(86) International application number: PCT/US2021/072808
(87) International publication number: WO 2022/154999

(56) References cited:
- WO-A1-2019/122494
- WO-A1-2020/102831
- "3rd Generation Partnership Project; Technical Specification Group Services and System Aspects; Study on Support for Minimization of Service Interruption (Release 17)", vol. SA WG1, no. V17.1.0, 27 December 2019 (2019-12-27), pages 1 - 19, XP051841004, Retrieved from the Internet <URL:ftp://ftp.3gpp.org/Specs/archive/22_series/22.831/22831-h10.zip 22831-h10.docx> [retrieved on 20191227]

## Description

### TECHNICAL FIELD

Aspects of the present disclosure relate generally to wireless communication and to techniques for network selection in a service interruption scenario.

### DESCRIPTION OF THE RELATED TECHNOLOGY

Wireless communication systems are widely deployed to provide various telecommunication services such as telephony, video, data, messaging, and broadcasts. Typical wireless communication systems may employ multiple-access technologies capable of supporting communication with multiple users by sharing available system resources (for example, bandwidth, transmit power, etc.). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink (DL) and uplink (UL). The DL (or forward link) refers to the communication link from the BS to the UE, and the UL (or reverse link) refers to the communication link from the UE to the BS. As will be described in more detail herein, a BS may be referred to as a NodeB, an LTE evolved nodeB (eNB), a gNB, an access point (AP), a radio head, a transmit receive point (TRP), a New Radio (NR) BS, or a 5G NodeB.

The above multiple access technologies have been adopted in various telecommunication standards to provide a common protocol that enables different UEs to communicate on a municipal, national, regional, and even global level. NR, which also may be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency-division multiplexing (OFDM) with a cyclic prefix (CP) (CP-OFDM) on the DL, using CP-OFDM or SC-FDM (for example, also known as discrete Fourier transform spread OFDM (DFT-s-OFDM)) on the UL (or a combination thereof), as well as supporting beamforming, multiple-input multiple-output (MIMO) antenna technology, and carrier aggregation.

WO 2020/102831 A1 discloses a method that includes receiving from a home network of a user equipment, one or more service change network selection lists (SCNSLs); detecting a service change occurred indicator associated with the home network is set to a first specified value, and based thereon: switching from using a network selection list to using a SCNSL in accordance with its selection policy; scanning for suitable networks that are in the SCNSL; receiving identifiers from one or more networks that are in the SCNSL; determining a network selection priority in accordance with the SCNSL; and selecting one of the one or more networks in the SCNSL in accordance with the network selection priority.

"3rd Generation Partnership Project; Technical Specification Group Services and System Aspects; Study on Support for Minimization of Service Interruption (Release 17)", vol. SA WG1, no. V17.1.0, TR 22.831, discusses service flows for disaster scenarios.

### SUMMARY

The invention comprises a method of wireless communication performed by an apparatus of a user equipment (UE). The method includes receiving an indication that a condition is associated with a first network to which the UE is registered, wherein the condition is a disaster condition; and performing a network selection procedure based at least in part on receiving the indication, where the network selection procedure includes a legacy network selection procedure, and where the network selection procedure is associated with roaming information received by or configured on the UE.

In some aspects, the method further includes camping on a second network when a result of performing the legacy network selection procedure is a successful registration on the second network.

In some aspects, the method further includes performing a higher priority network search after the successful registration on the second network.

In some aspects, the higher priority network search is performed according to a periodicity associated with performing the higher priority network search.

According to the invention, the method comprises performing the network selection procedure includes performing a roaming network selection procedure after performing the legacy network selection procedure.

In some aspects, the roaming network selection procedure is performed based at least in part on the UE being unable to register on another network when performing a legacy network selection procedure.

According to the invention, performing the roaming network selection procedure includes identifying a set of networks that have indicated accommodation for inbound roamers; and attempting to register on at least one network of the set of networks that have indicated accommodation for inbound roamers.

In some aspects, the at least one network includes a network that is on a list of networks forbidden to the UE.

In some aspects, the set of networks includes multiple networks, and an order in which the UE attempts to register on the at least one network is based at least in part on roaming information associated with the set of networks.

In some aspects, the roaming information is preconfigured on the UE.

In some aspects, the roaming information is received by the UE via over-the-air signaling.

In some aspects, the roaming information includes an ordered list of the set of networks.

In some aspects, the set of networks includes multiple networks, and an order in which the UE attempts to register on the at least one network is randomized.

In some aspects, the method further includes camping on a second network when a result of performing the roaming network selection procedure is a successful registration on the second network.

In some aspects, the method further includes refraining from removing the second network from a list of networks forbidden to the UE when the second network is on a list of networks forbidden to the UE.

In some aspects, the method further includes performing a higher priority network search when the UE is roaming according to a configured periodicity, associated with performing the higher priority network search when the UE is roaming.

In some aspects, the UE is in an automatic network selection mode.

In some aspects, the condition is a disaster condition and the roaming information is disaster roaming information to be used in association with performing the network selection procedure based at least in part on the indication indicating that the disaster condition is associated with the first network.

The invention further comprises an apparatus of a UE for wireless communication according to the subject-matter of the appended independent claim 14.

Aspects generally include a method, apparatus, system, computer program product, non-transitory computer-readable medium, user equipment, base station, wireless communication device, or processing system as substantially described herein with reference to and as illustrated by the accompanying drawings.

Details of one or more implementations of the subject matter described in this disclosure are set forth in the accompanying drawings and the description below. Other features, aspects, and advantages will become apparent from the description, the drawings and the claims. Note that the relative dimensions of the following figures may not be drawn to scale.

### BRIEF DESCRIPTION OF THE DRAWINGS

Figure 1 is a diagram illustrating an example of a wireless network.
Figure 2 is a diagram illustrating an example of a base station (BS) in communication with a user equipment (UE) in a wireless network.
Figure 3 is a diagram illustrating an example associated with network selection in a service interruption scenario.
Figures 4 and 5 are diagrams illustrating example processes performed, for example, by a UE.
Figure 6 is a diagram illustrating an example process performed, for example, by a BS.
Figures 7 and 8 are block diagrams of example apparatuses for wireless communication.

Like reference numbers and designations in the various drawings indicate like elements.

### DETAILED DESCRIPTION

The following description is directed to certain implementations for the purposes of describing the innovative aspects of this disclosure. However, a person having ordinary skill in the art will readily recognize that the teachings herein can be applied in a multitude of different ways. Some of the examples in this disclosure are based on wireless and wired local area network (LAN) communication according to the Institute of Electrical and Electronics Engineers (IEEE) 802.11 wireless standards, the IEEE 802.3 Ethernet standards, and the IEEE 1901 Powerline communication (PLC) standards. However, the described implementations may be implemented in any device, system or network that is capable of transmitting and receiving radio frequency signals according to any of the wireless communication standards, including any of the IEEE 802.11 standards, the Bluetooth^{®} standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), ixEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), AMPS, or other known signals that are used to communicate within a wireless, cellular or internet of things (IOT) network, such as a system utilizing 3G, 4G or 5G, or further implementations thereof, technology.

A minimization of service interruption (MINT) requirement may dictate that subscriber UEs of a network operator are notified when a network of the network operator experiences a situation that causes a service interruption (for example, a natural or other disaster, an emergency situation, etc.), and that the subscriber UEs can attempt to obtain service from a network of another network operator. One issue to be addressed in order to implement MINT is how a UE is to perform network selection when the network to which the UE is registered experiences a service interruption.

A first possible technique for performing network selection in such a scenario is for the UE to perform a roaming network selection procedure (for example, a disaster network selection procedure) after performing a legacy network selection procedure that results in a finding of no available network. A second possible technique for performing network selection in such a scenario is for the UE to perform a roaming network selection procedure as soon as the UE is notified that the network to which the UE is subscribed is experiencing a service interruption (for example, upon receiving a notification that a disaster condition applies to the network to which the UE is registered). Notably, neither the first technique nor the second technique works optimally in all possible deployments and roaming scenarios. Therefore, it is desirable to make whether the first technique or the second technique is applied a configuration parameter of the UE, and optionally dependent on whether the UE is roaming.

Some aspects described herein provide techniques and apparatuses for network selection in a service interruption scenario. In some aspects, a UE may receive (for example, from a BS) a setting for a configuration parameter associated with a roaming network selection. The UE may additionally receive an indication that a condition is associated with a first network to which the UE is registered. The UE may perform a network selection procedure according to the setting of the configuration parameter based at least in part on receiving the indication. Alternatively, in some aspects, the UE may provide, for display and based at least in part on receiving the indication, network selection information associated with a set of networks. Here, for a given network in the set of networks, the network selection information includes an indication that either the condition is associated with the given network or that the given network accommodates inbound roamers.

Particular implementations of the subject matter described in this disclosure can be implemented to realize one or more of the following potential advantages. The techniques and apparatuses for network selection in a service interruption scenario described herein may enable configuration of the UE for determining a manner in which a network selection is to be performed. This may allow the performance of the network selection to be optimized for a UE in a given circumstance. In some aspects, the techniques and apparatuses for network selection described herein may reduce an amount of time needed for the UE to receive service in a service interruption scenario. The techniques and apparatuses for network selection described herein also may reduce the number of attempts from the UE to access a network that cannot serve the UE, thereby potentially reducing the overall signaling load.

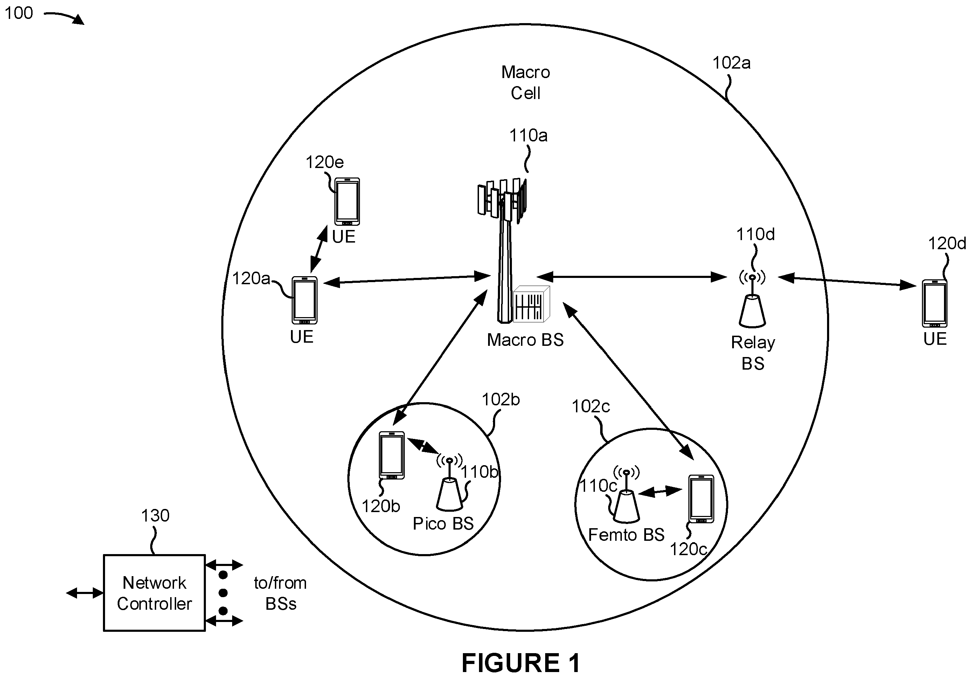

Figure 1 is a diagram illustrating an example of a wireless network 100. The wireless network 100 may be or may include elements of a 5G (NR) network, an LTE network, or another type of network. The wireless network 100 may include one or more base stations 110 (shown as BS 110a, BS 110b, BS 110c, and BS 110d) and other network entities. A base station (BS) is an entity that communicates with user equipment (UEs) and also may be referred to as an NR BS, a Node B, a gNB, a 5G node B (NB), an access point, or a transmit receive point (TRP). Each BS may provide communication coverage for a particular geographic area. In 3GPP, the term "cell" can refer to a coverage area of a BS, a BS subsystem serving this coverage area, or a combination thereof, depending on the context in which the term is used.

A BS may provide communication coverage for a macro cell, a pico cell, a femto cell, another type of cell, or a combination thereof. A macro cell may cover a relatively large geographic area (for example, several kilometers in radius) and may allow unrestricted access by UEs with service subscription. A pico cell may cover a relatively small geographic area and may allow unrestricted access by UEs with service subscription. A femto cell may cover a relatively small geographic area (for example, a home) and may allow restricted access by UEs having association with the femto cell (for example, UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Figure 1, a BS 110a may be a macro BS for a macro cell 102a, a BS 110b may be a pico BS for a pico cell 102b, and a BS 110c may be a femto BS for a femto cell 102c. A BS may support one or multiple (for example, three) cells. The terms "eNB", "base station", "NR BS", "gNB", "TRP", "AP", "node B", "5G NB", and "cell" may be used interchangeably herein.

In some examples, a cell may not necessarily be stationary, and the geographic area of the cell may move according to the location of a mobile BS. In some examples, the BSs may be interconnected to one another as well as to one or more other BSs or network nodes (not shown) in the wireless network 100 through various types of backhaul interfaces, such as a direct physical connection, a virtual network, or a combination thereof, using any suitable transport network.

The wireless network 100 may include relay stations. A relay station is an entity that can receive a transmission of data from an upstream station (for example, a BS or a UE) and send a transmission of the data to a downstream station (for example, a UE or a BS). A relay station also may be a UE that can relay transmissions for other UEs. In the example shown in Figure 1, a relay BS 110d may communicate with a macro BS 110a and a UE 120d in order to facilitate communication between the macro BS 110a and the UE 120d. A relay BS also may be referred to as a relay station, a relay base station, a relay, etc.

The wireless network 100 may be a heterogeneous network that includes BSs of different types, such as macro BSs, pico BSs, femto BSs, or relay BSs, among other examples. These different types of BSs may have different transmit power levels, different coverage areas, and different impacts on interference in the wireless network 100. For example, macro BSs may have a high transmit power level (for example, 5 to 40 watts) whereas pico BSs, femto BSs, and relay BSs may have lower transmit power levels (for example, 0.1 to 2 watts).

A network controller 130 may couple to a set of BSs and may provide coordination and control for these BSs. The network controller 130 may communicate with the BSs via a backhaul. The BSs also may communicate with one another, for example, directly or indirectly via a wireless or wireline backhaul.

Multiple UEs 120 (for example, a UE 120a, a UE 120b, a UE 120c, etc.) may be dispersed throughout the wireless network 100, and each UE may be stationary or mobile. A UE also may be referred to as an access terminal, a terminal, a mobile station, a subscriber unit, a station, etc. A UE may be a cellular phone (for example, a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (for example, smart ring, smart bracelet)), an entertainment device (for example, a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, or location tags, that may communicate with a base station, another device (for example, remote device), or some other entity. A wireless node may provide, for example, connectivity for or to a network (for example, a wide area network such as Internet or a cellular network) via a wired or wireless communication link. Some UEs may be considered Internet-of-Things (IoT) devices or may be implemented as NB-IoT (narrowband internet of things) devices. Some UEs may be considered a Customer Premises Equipment (CPE). A UE 120 may be included inside a housing that houses components of the UE 120, such as processor components, memory components, or other components. In some examples, the processor components and the memory components may be coupled together. For example, the processor components (for example, one or more processors) and the memory components (for example, a memory) may be operatively coupled, communicatively coupled, electronically coupled, or electrically coupled, among other examples.

In general, any number of wireless networks may be deployed in a given geographic area. Each wireless network may support a particular RAT and may operate on one or more frequencies. A RAT also may be referred to as a radio technology, an air interface, etc. A frequency also may be referred to as a carrier, a frequency channel, etc. Each frequency may support a single RAT in a given geographic area in order to avoid interference between wireless networks of different RATs. In some cases, NR or 5G RAT networks may be deployed.

As described herein, a BS 110 may include one or more components that are located at a single physical location or one or more components located at various physical locations. In examples in which the BS 110 includes components that are located at various physical locations, the various components may each perform various functions such that, collectively, the various components achieve functionality that is similar to a BS 110 that is located at a single physical location. As such, a BS 110 described herein may equivalently refer to a standalone BS 110 (also known as a monolithic BS) or a BS 110 including components that are located at various physical locations or virtualized locations (also known as a disaggregated BS). In some implementations, such a BS 110 including components that are located at various physical locations may be referred to as or may be associated with a disaggregated radio access network (RAN) architecture, such as an Open RAN (O-RAN) or Virtualized RAN (VRAN) architecture. In some implementations, such components of a BS 110 may include or refer to one or more of a central unit (or centralized unit CU), a distributed unit (DU), or a radio unit (RU).

In some aspects, two or more UEs 120 (for example, shown as a UE 120a and a UE 120e) may communicate directly using one or more sidelink channels (for example, without using a base station 110 as an intermediary to communicate with one another). For example, the UEs 120 may communicate using peer-to-peer (P2P) communications, device-to-device (D2D) communications, a vehicle-to-everything (V2X) protocol (which may include a vehicle-to-vehicle (V2V) protocol, a vehicle-to-infrastructure (V2I) protocol, or a similar protocol), or a mesh network. In such examples, the UE 120 may perform scheduling operations, resource selection operations, as well as other operations described elsewhere herein as being performed by the base station 110.

Devices of the wireless network 100 may communicate using the electromagnetic spectrum, which may be subdivided based on frequency or wavelength into various classes, bands, or channels. For example, devices of the wireless network 100 may communicate using an operating band having a first frequency range (FR1), which may span from 410 MHz to 7.125 GHz. As another example, devices of the wireless network 100 may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" may broadly represent frequencies less than 6 GHz, frequencies within FR1, mid-band frequencies (for example, greater than 7.125 GHz), or a combination thereof. Similarly, unless specifically stated otherwise, it should be understood that the term "millimeter wave" may broadly represent frequencies within the EHF band, frequencies within FR2, mid-band frequencies (for example, less than 24.25 GHz), or a combination thereof. It is contemplated that the frequencies included in FR1 and FR2 may be modified, and techniques described herein are applicable to those modified frequency ranges.

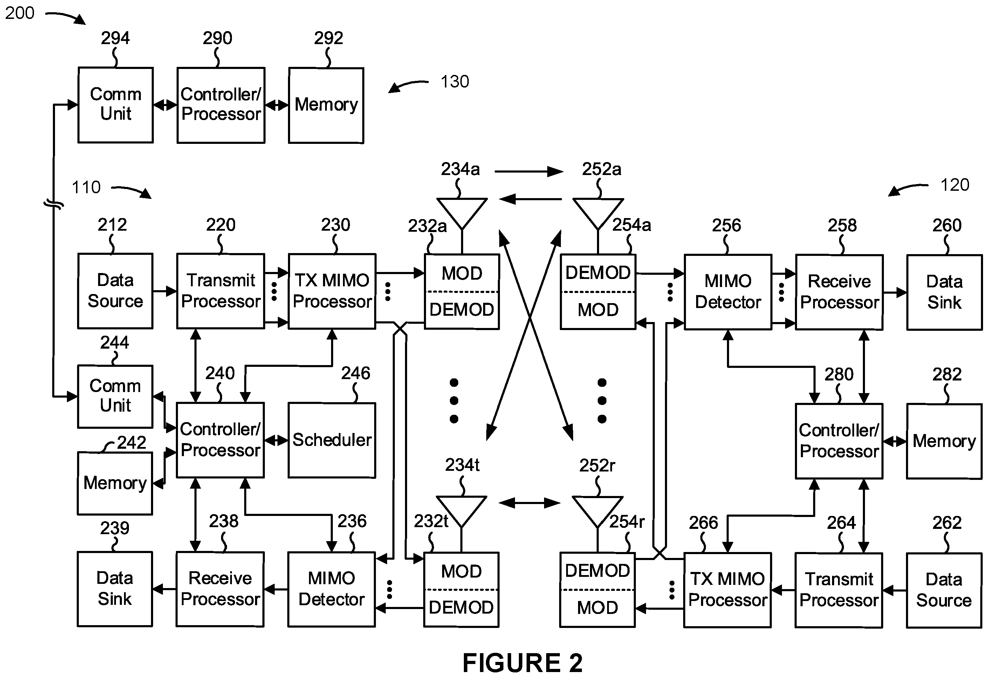

Figure 2 is a diagram illustrating an example 200 of a base station 110 in communication with a UE 120 in a wireless network 100. The base station 110 may be equipped with T antennas 234a through 234t, and the UE 120 may be equipped with R antennas 252a through 252r, where in general T ≥ 1 and R ≥ 1.

At the base station 110, a transmit processor 220 may receive data from a data source 212 for one or more UEs, select one or more modulation and coding schemes (MCS) for each UE based on channel quality indicators (CQIs) received from the UE, process (for example, encode and modulate) the data for each UE based on the MCS(s) selected for the UE, and provide data symbols for all UEs. The transmit processor 220 also may process system information (for example, for semi-static resource partitioning information) and control information (for example, CQI requests, grants, or upper layer signaling) and provide overhead symbols and control symbols. The transmit processor 220 also may generate reference symbols for reference signals (for example, a cell-specific reference signal (CRS) or a demodulation reference signal (DMRS)) and synchronization signals (for example, a primary synchronization signal (PSS) or a secondary synchronization signal (SSS)). A transmit (TX) multiple-input multiple-output (MIMO) processor 230 may perform spatial processing (for example, precoding) on the data symbols, the control symbols, the overhead symbols, or the reference symbols, if applicable, and may provide T output symbol streams to T modulators (MODs) 232a through 232t. Each modulator 232 may process a respective output symbol stream (for example, for OFDM) to obtain an output sample stream. Each modulator 232 may further process (for example, convert to analog, amplify, filter, and upconvert) the output sample stream to obtain a downlink signal. T downlink signals from the modulators 232a through 232t may be transmitted via T antennas 234a through 234t, respectively.

At the UE 120, the antennas 252a through 252r may receive the downlink signals from the base station 110 or other base stations and may provide received signals to the demodulators (DEMODs) 254a through 254r, respectively. Each demodulator 254 may condition (for example, filter, amplify, downconvert, and digitize) a received signal to obtain input samples. Each demodulator 254 may further process the input samples (for example, for OFDM) to obtain received symbols. A MIMO detector 256 may obtain received symbols from all R demodulators 254a through 254r, perform MIMO detection on the received symbols if applicable, and provide detected symbols. A receive processor 258 may process (for example, demodulate and decode) the detected symbols, provide decoded data for the UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, or a CQI parameter, among other examples. In some aspects, one or more components of the UE 120 may be included in a housing.

The network controller 130 may include a communication unit 294, a controller/processor 290, and a memory 292. The network controller 130 may include, for example, one or more devices in a core network. The network controller 130 may communicate with the base station 110 via the communication unit 294.

Antennas (such as antennas 234a through 234t or antennas 252a through 252r) may include, or may be included within, one or more antenna panels, antenna groups, sets of antenna elements, or antenna arrays, among other examples. An antenna panel, an antenna group, a set of antenna elements, or an antenna array may include one or more antenna elements. An antenna panel, an antenna group, a set of antenna elements, or an antenna array may include a set of coplanar antenna elements or a set of non-coplanar antenna elements. An antenna panel, an antenna group, a set of antenna elements, or an antenna array may include antenna elements within a single housing or antenna elements within multiple housings. An antenna panel, an antenna group, a set of antenna elements, or an antenna array may include one or more antenna elements coupled to one or more transmission or reception components, such as one or more components of Figure 2.

On the uplink, at the UE 120, a transmit processor 264 may receive and process data from a data source 262 and control information (for example, for reports including RSRP, RSSI, RSRQ, or CQI) from a controller/processor 280. The transmit processor 264 also may generate reference symbols for one or more reference signals. The symbols from the transmit processor 264 may be precoded by a TX MIMO processor 266 if applicable, further processed by the modulators 254a through 254r (for example, for DFT-s-OFDM or CP-OFDM), and transmitted to the base station 110. In some aspects, a modulator and a demodulator (for example, MOD/DEMOD 254) of the UE 120 may be included in a modem of the UE 120. In some aspects, the UE 120 includes a transceiver. The transceiver may include any combination of the antenna(s) 252, the modulators 254, the demodulators 254, the MIMO detector 256, the receive processor 258, the transmit processor 264, or the TX MIMO processor 266. The transceiver may be used by a processor (for example, the controller/processor 280) and the memory 282 to perform aspects of any of the processes described herein.

At the base station 110, the uplink signals from the UE 120 and other UEs may be received by the antennas 234, processed by the demodulators 232, detected by a MIMO detector 236 if applicable, and further processed by a receive processor 238 to obtain decoded data and control information sent by the UE 120. The receive processor 238 may provide the decoded data to a data sink 239 and the decoded control information to a controller/processor 240. The base station 110 may include a communication unit 244 and may communicate with the network controller 130 via the communication unit 244. The base station 110 may include a scheduler 246 to schedule one or more UEs 120 for downlink communications, uplink communications, or a combination thereof. In some aspects, a modulator and a demodulator (for example, MOD/DEMOD 232) of the base station 110 may be included in a modem of the base station 110. In some aspects, the base station 110 includes a transceiver. The transceiver may include any combination of the antenna(s) 234, the modulators 232, the demodulators 232, the MIMO detector 236, the receive processor 238, the transmit processor 220, or the TX MIMO processor 230. The transceiver may be used by a processor (for example, the controller/processor 240) and a memory 242 to perform aspects of any of the processes described herein.

In some implementations, the controller/processor 280 may be a component of a processing system. A processing system may generally refer to a system or series of machines or components that receives inputs and processes the inputs to produce a set of outputs (which may be passed to other systems or components of, for example, the UE 120). For example, a processing system of the UE 120 may refer to a system including the various other components or subcomponents of the UE 120.

The processing system of the UE 120 may interface with other components of the UE 120, and may process information received from other components (such as inputs or signals), output information to other components, etc. For example, a chip or modem of the UE 120 may include a processing system, a first interface to receive or obtain information, and a second interface to output, transmit or provide information. In some cases, the first interface may refer to an interface between the processing system of the chip or modem and a receiver, such that the UE 120 may receive information or signal inputs, and the information may be passed to the processing system. In some cases, the second interface may refer to an interface between the processing system of the chip or modem and a transmitter, such that the UE 120 may transmit information output from the chip or modem. A person having ordinary skill in the art will readily recognize that the second interface also may obtain or receive information or signal inputs, and the first interface also may output, transmit or provide information.

In some implementations, the controller/processor 240 may be a component of a processing system. A processing system may generally refer to a system or series of machines or components that receives inputs and processes the inputs to produce a set of outputs (which may be passed to other systems or components of, for example, the base station 110). For example, a processing system of the base station 110 may refer to a system including the various other components or subcomponents of the base station 110.

The processing system of the base station 110 may interface with other components of the base station 110, and may process information received from other components (such as inputs or signals), output information to other components, etc. For example, a chip or modem of the base station 110 may include a processing system, a first interface to receive or obtain information, and a second interface to output, transmit or provide information. In some cases, the first interface may refer to an interface between the processing system of the chip or modem and a receiver, such that the base station 110 may receive information or signal inputs, and the information may be passed to the processing system. In some cases, the second interface may refer to an interface between the processing system of the chip or modem and a transmitter, such that the base station 110 may transmit information output from the chip or modem. A person having ordinary skill in the art will readily recognize that the second interface also may obtain or receive information or signal inputs, and the first interface also may output, transmit or provide information.

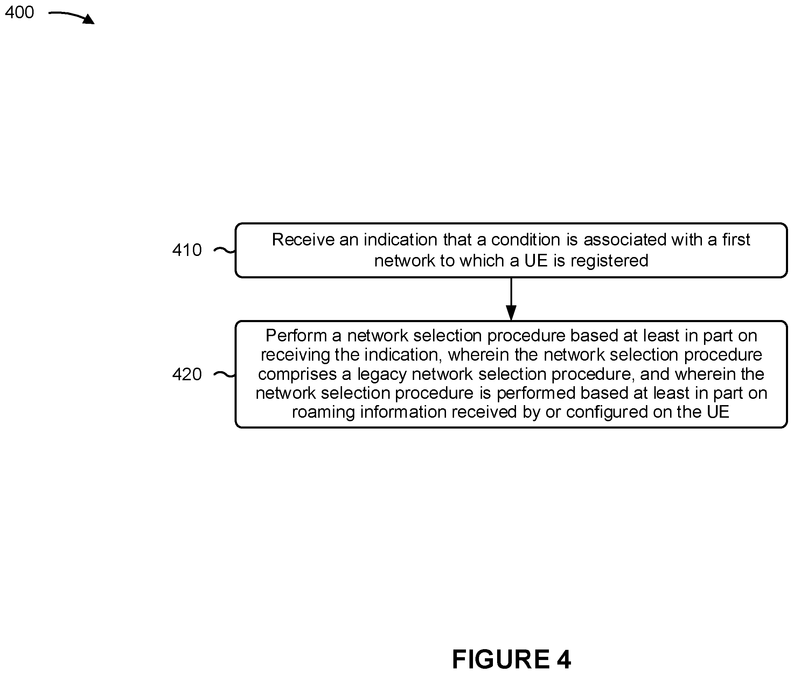

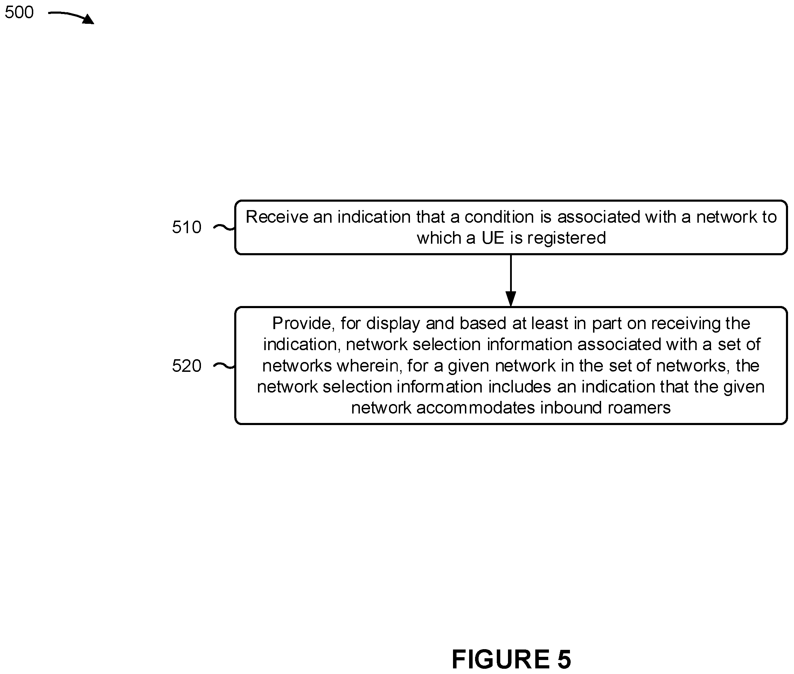

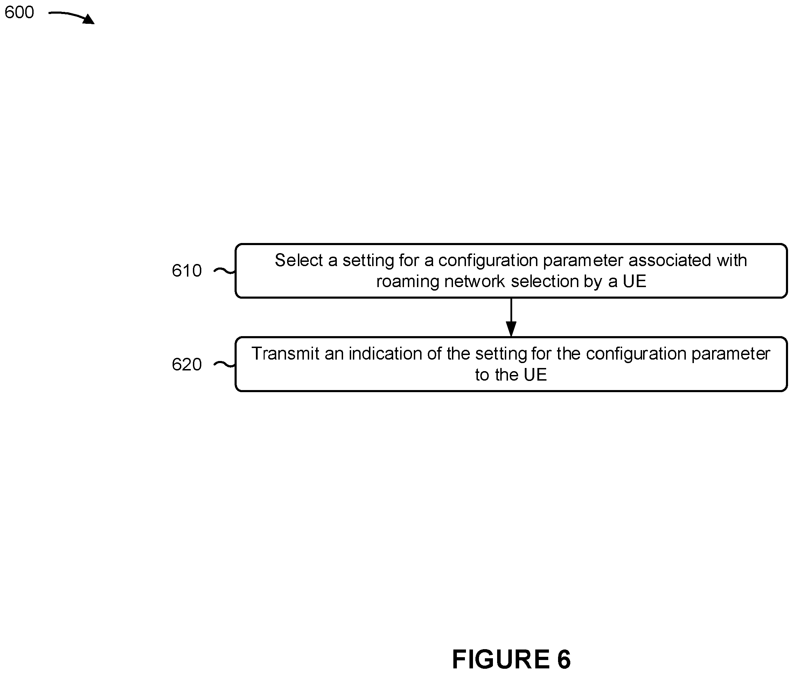

The controller/processor 240 of the base station 110, the controller/processor 280 of the UE 120, or any other component(s) of Figure 2 may perform one or more techniques associated with network selection in a disaster scenario, as described in more detail elsewhere herein. For example, the controller/processor 240 of the base station 110, the controller/processor 280 of the UE 120, or any other component(s) (or combinations of components) of Figure 2 may perform or direct operations of, for example, process 400 of Figure 4, process 500 of Figure 5, process 600 of Figure 6, or other processes as described herein. The memory 242 and the memory 282 may store data and program codes for the base station 110 and the UE 120, respectively. In some aspects, the memory 242 and the memory 282 may include a non-transitory computer-readable medium storing one or more instructions (for example, code or program code) for wireless communication. For example, the one or more instructions, when executed (for example, directly, or after compiling, converting, or interpreting) by one or more processors of the base station 110 or the UE 120, may cause the one or more processors, the UE 120, or the base station 110 to perform or direct operations of, for example, process 400 of Figure 4, process 500 of Figure 5, process 600 of Figure 6, or other processes as described herein.

In some aspects, the apparatus includes means for receiving an indication that a condition is associated with a first network to which a UE is registered; or means for performing a network selection procedure based at least in part on receiving the indication, where the network selection procedure includes a legacy network selection procedure, and where the network selection procedure is associated with roaming information received by or configured on the UE. In some aspects, the means for the apparatus to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the apparatus includes means for camping on a second network when a result of performing the legacy network selection procedure is a successful registration on the second network.

In some aspects, the apparatus includes means for performing a higher priority network search after the successful registration on the second network. In some aspects, the higher priority network search is performed without considering the first network as a network selection candidate when the UE is roaming.

In some aspects, the apparatus includes means for performing a higher priority network search after the successful registration on the second network, where the higher priority network search is performed without considering terrestrial radio access technologies of the first network as a network selection candidate when the UE is roaming.

In some aspects, the apparatus includes means for detecting a trigger to perform an additional network selection procedure, the trigger being one of a switch-off of the UE or a loss of coverage for the UE, and means for performing the legacy network selection procedure based at least in part on detecting the trigger and without considering the first network as a network selection candidate.

In some aspects, the apparatus includes means for detecting a trigger to perform an additional network selection procedure, the trigger being one of a switch-off of the UE or a loss of coverage for the UE, and means for performing the legacy network selection procedure based at least in part on detecting the trigger and without considering terrestrial radio access technologies of the first network as a network selection candidate.

In some aspects, the apparatus includes means for identifying a set of networks that have indicated accommodation for inbound roamers; or means for attempting to register on at least one network of the set of networks that have indicated accommodation for inbound roamers.

In some aspects, the apparatus includes means for camping on a second network when a result of performing the roaming network selection procedure is a successful registration on the second network.

In some aspects, the apparatus includes means for refraining from removing the second network from a list of networks forbidden to the UE when the second network is on a list of networks forbidden to the UE.

In some aspects, the apparatus includes means for performing a higher priority network search when the UE is roaming according to a periodicity, such as a configured periodicity, associated with performing the higher priority network search when the UE is roaming.

In some aspects, the apparatus includes means for refraining from performing a higher priority network search when the UE is roaming until receiving a notification that the condition no longer is associated with the first network when the second network is a visited network.

In some aspects, the apparatus includes means for performing a higher priority network search after the successful registration on the second network when the UE is roaming, where the higher priority network search is performed without considering the first network as a network selection candidate.

In some aspects, the apparatus includes means for performing a higher priority network search after the successful registration on the second network when the UE is roaming, where the higher priority network search is performed without considering terrestrial radio access technologies of the first network as a network selection candidate.

In some aspects, the apparatus includes means for detecting a trigger to perform an additional network selection procedure, the trigger being one of a switch-off of the UE or a loss of coverage for the UE, and means for performing the roaming network selection procedure based at least in part on detecting the trigger. In some aspects, an apparatus includes means for receiving an indication that a condition is associated with a network to which a UE is registered; or means for providing, for display and based at least in part on receiving the indication, network selection information associated with a set of networks, where, for a given network in the set of networks, the network selection information includes an indication that the given network accommodates inbound roamers. In some aspects, the means for the apparatus to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the apparatus includes means for performing a network selection procedure based at least in part on user input indicating a network, of the set of networks, selected by a user.

In some aspects, an apparatus includes means for selecting a setting for a configuration parameter associated with roaming network selection by a user equipment (UE); or means for transmitting an indication of the setting for the configuration parameter to the UE. In some aspects, the means for the apparatus to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

While blocks in Figure 2 are illustrated as distinct components, the functions described above with respect to the blocks may be implemented in a single hardware, software, or combination component or in various combinations of components. For example, the functions described with respect to the transmit processor 264, the receive processor 258, the TX MIMO processor 266, or another processor may be performed by or under the control of the controller/processor 280.

Mobile communication service has become an essential part of our society. Thus, it is important that users of a mobile communication service receive services without being interrupted. However, some events can cause interruption of communication services. For example, a natural disaster, such as an earthquake or a hurricane, among other examples, can cause fire or power outage to some RAN equipment, which can result in an abrupt disappearance of cells or no routing among the RAN and an associated core network. As another example, a human-made disaster (for example, installation of software with bugs or certificate mismanagement, terroristic-type events, power grid shutdowns, among other examples) can cause abnormal behavior of a RAN that disrupts communication services of a UE registered to the network. An impact (for example, a societal impact or a business impact, among other examples) resulting from interrupted communication services may be significant, particularly in a disaster scenario. Therefore, it is important to minimize the time and area where service is interrupted. This concept is often referred to as MINT.

A basic principle of MINT is that, when a network of a network operator experiences a service interruption (for example, a disaster), subscriber UEs of the network operator are notified and can attempt to obtain service from a network of another network operator (for example, another network that is available in the same location as the network experiencing the service interruption). Taking a disaster scenario as an example, in the context of MINT, a "disaster condition" is said to apply to a network when a disaster (for example, a natural disaster, an accidental disaster, or an intentionally-caused disaster, among other examples) results in the network being unable to provide normal service to subscriber UEs of the network. Here, a subscriber UE from the network to which the disaster condition applies (i.e., the network subject to the disaster) is referred to as a "disaster inbound roamer." According to the MINT concept, a disaster inbound roamer should be able to attempt to register on one or more other networks (herein referred to as "other networks" or "other public land mobile networks (PLMNs)"). A network to which a disaster condition is applies may be referred to as a "network with disaster condition" (for example, a "PLMN with disaster condition"), while a network to which no disaster condition applies may be referred to as a "network without disaster condition" (for example, "PLMN without disaster condition"). In one possible implementation of MINT, a disaster inbound roamer may use a particular access identity (for example, Access Identity 3) when performing an access attempt on a network not subject to disaster.

There are several issues to be addressed in order to implement the MINT concept. One such issue is determining how a UE is to perform network selection when a condition (for example, a disaster condition) applies to a network to which the UE is registered. Notably, for the purposes of MINT in a service interruption scenario, the UE may in some cases be permitted to select a network included in a list of networks that are otherwise forbidden to the UE when the forbidden network has indicated acceptance of inbound roamers (for example, disaster inbound roamers).

A first technique for performing network selection when the network to which the UE is registered experiences a service interruption (for example, when a disaster condition applies to the network) is to perform a roaming network selection procedure (for example, a disaster roaming network selection procedure) after performing a legacy network selection procedure that results in a finding of no available network. According to this technique, normal service is preferred over roaming service. Here, if there is an available network without a service interruption (for example, without a disaster condition) and the available network is not in the forbidden network list of the UE, the UE may attempt to register on the available network first, even if the available network does not indicate that inbound roamers are accepted. This technique makes roaming a last resort before the UE reverts to limited service. An advantage of this technique is that the UE may be provided with normal service in some cases. However, when there is no network that can provide normal service to the UE, an amount of time needed for the UE to start receiving service may be relatively long.

A second technique for performing network selection when the network to which the UE experiences a service interruption is to perform the roaming network selection procedure as soon as the UE is notified of the service interruption (for example, upon being notified that the network a disaster condition applies to the network). According to this technique, the roaming network selection procedure is performed without performing a legacy network selection procedure. Here, the UE may prioritize networks that indicate acceptance of inbound roamers. Notably, the networks that indicate acceptance of inbound roamers may or may not be included in a list of networks forbidden to the UE. This means that in some cases the UE could select a network that is typically forbidden to the UE over a network that is not included on the list of forbidden networks. One advantage of the second technique is that UE directly attempts to register on a network which the UE knows will accept registration, meaning that an amount of time needed for the UE to begin receiving service can be relatively short. Another advantage of this technique is that a network that indicates acceptance of inbound roamers may have increased capacity to handle an influx of roamers, meaning that it is less likely that a registration attempt by the UE will fail due to congestion (for example, as compared to a network that is not prepared for disaster inbound roamers). However, according to this technique, it is possible that the UE may receive disaster roaming service when the UE could have received normal service.

Notably, whether the first technique will enable a UE to receive normal service will depend on a number of factors, such as whether the UE is roaming, the existence or terms of any roaming agreements associated with the UE (when the UE is roaming), or a number of networks that are available at a location of the UE. A UE in a home network (for example, a home PLMN (HPLMN)) is unlikely to receive normal service on another network of a home country of the UE (for example, without a roaming agreement). However, if the UE is roaming (for example, is in a non-home country) and is registered to a visited network (for example, a visited PLMN (VPLMN)), the UE may be able to receive normal service in another visited network.

Some aspects described herein provide techniques and apparatuses for network selection in a service interruption scenario. In some aspects, a UE may receive an indication that a condition is associated with a first network to which the UE is registered. The UE may perform a network selection procedure based at least in part on receiving the indication. In some aspects, the network selection procedure includes a legacy network selection procedure, and the network selection procedure is associated with roaming information received by or configured on the UE.

Alternatively, in some aspects, a UE may receive an indication that a condition is associated with a network to which the UE is registered. In some implementations, the UE may provide, for display and based at least in part on receiving the indication, network selection information associated with a set of networks. Here, for a given network in the set of networks, the network selection information includes an indication that the given network accommodates inbound roamers.

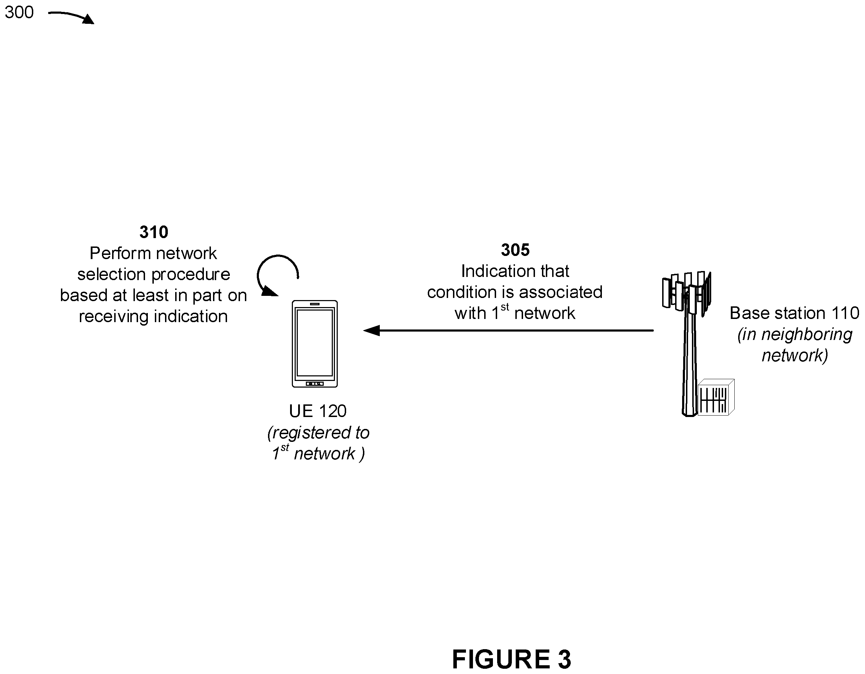

Figure 3 is a diagram illustrating an example 300 associated with network selection in a service interruption scenario, in accordance with the present disclosure. As shown in Figure 3, example 300 includes communication between a base station 110 and a UE 120. In the example 300, the UE 120 is registered to a first network (for example, a first PLMN).

As shown in Figure 3 by reference 305, the UE 120 may receive an indication that a condition is associated with the first network to which the UE 120 is registered. For example, as illustrated in Figure 3, the UE 120 may receive, from the base station 110 associated with another network (in other words, a neighboring network or, more generally, a network other than the first network), an indication that a disaster condition is associated with the first network. As another example, the UE 120 may receive the indication based at least in part on detecting the condition associated with the first network (for example, detecting a coverage outage associated with the first network). Here, the indication serves to indicate to the UE 120 that service provided by the first network is or will be interrupted.

As shown by reference 310, the UE 120 may perform a network selection procedure based at least in part on receiving the indication. That is, the UE 120 may, in response to receiving the indication, perform a network selection procedure associated with selecting another network via which to receive service. In some aspects, the network selection procedure includes a legacy network selection procedure.

In some aspects, a result of performing the legacy network selection procedure may be a successful registration on a second network (for example, a second PLMN). In such a case, the UE 120 may camp on the second network. In some aspects, the UE 120 may perform a higher priority network search after the successful registration on the second network resulting from performing the legacy network selection procedure. For example, the UE 120 may be configured with a periodicity indicating an interval (for example, a previously configured timer duration T, a timer duration configured for use in association with performing higher priority network searches, or the like) at which to perform a higher priority network search after the successful registration on the second network resulting from performing the legacy network selection procedure. In some aspects, after the successful registration on the second network, the UE 120 may perform the higher priority network search according to the configured periodicity. In this way, the UE 120 may attempt to register on a higher priority network after initially registering on the second network as a result of performing the legacy network selection procedure.

In some aspects, the UE 120 may perform a roaming network selection procedure. For example, the UE 120 may be unable to register on any network when performing the legacy network selection procedure. The UE 120 may perform the roaming network selection procedure based at least in part on failing to register on any legacy network using the legacy network selection procedure. That is, in some aspects, the UE 120 may be configured to perform the roaming network selection procedure after failing to register on a network using the legacy network selection procedure.

In some aspects, when performing the roaming network selection procedure, the UE 120 may select, determine, ascertain, or identify a set of networks that have indicated accommodation for inbound roamers (for example, one or more networks that have indicated capability to provide service to roaming UEs 120). The UE 120 may attempt to register on one or more networks of the set of networks that have indicated accommodation for inbound roamers. For example, the UE 120 may receive one or more lists of one or more PLMNs to be used in when the condition is associated with the first network. In some aspects, each of the one or more lists may include zero or more entries, where each entry includes a PLMN identifier and the PLMNs are listed in order of decreasing priority, with the first PLMN being the highest priority PLMN. In some aspects, the one or more lists may be received via the first network (for example, a home PLMN of the UE 120). Additionally, or alternatively, the one or more lists may be received via one or more other networks (for example, one or more visited PLMNs of the UE 120).

In some aspects, the UE 120 may attempt to register on a network that is on a list of networks forbidden to the UE 120. That is, in some aspects, at least one network on which the UE 120 may attempt to register may be a network that is on a list of networks that is otherwise forbidden to the UE 120. Put another way, in some aspects, the UE 120 is permitted to attempt to register on a network that is forbidden to the UE 120 and, therefore, the UE 120 may in some instances register on a network that is otherwise forbidden to the UE 120. In other words, in some aspects, the UE 120 may attempt registration on a forbidden network when performing the network selection procedure based at least in part on the indication that the condition is associated with the first network. For example, in some aspects, the UE 120 may attempt to register on each forbidden PLMN in a list of one or more PLMNs, to be used when the condition is associated with the first network, that is associated with a PLMN identifier of the first network, with the registration attempts being ordered based on the list of one or more PLMNs associated with the PLMN identifier of the first network. Here, in the case of no successful registration, the UE 120 may attempt to register on other forbidden PLMNs in a random order. In some aspects, the UE 120 may attempt to register on a forbidden network when there are no available networks on which the UE 120 is permitted to register.

In some aspects, the set of networks includes multiple networks, and an order in which the UE 120 attempts to register is associated with roaming information. For example, in some aspects, the roaming information includes an ordered list of the set of networks, where the ordered list indicates an order in which the UE 120 is to attempt to register on one or more of the networks included in the set of networks. In some aspects, an order in which the UE 120 attempts to register on networks in the set of networks indicated by the roaming information is randomized (for example, after failing to register on networks for which an order is indicated, the UE 120 may randomize an order in which to register on remaining networks in the set of networks). In some aspects, the UE 120 may be preconfigured with the roaming information. Additionally, or alternatively, the UE 120 may receive the roaming information via over-the-air signaling. In some aspects, the roaming information is to be used by the UE for performing the network selection procedure based at least in part on the UE 120 receiving an indication that a disaster condition is associated with the first network. In such a context, the roaming information may be referred to as disaster roaming information.

In some aspects, a result of performing the roaming network selection procedure is a successful registration on a second network from the set of networks indicated in the roaming information. In such a case, the UE 120 may camp on the second network. In some aspects, the UE 120 may refrain from removing the second network from a list of networks forbidden to the UE 120 when the second network is on a list of networks forbidden to the UE. In some aspects, the UE 120 may perform a higher priority network search after the successful registration on the second network resulting from performing the roaming network selection procedure. For example, the UE 120 may be configured with a periodicity indicating an interval (for example, a previously configured timer duration T, a timer duration configured for use in association with performing higher priority network searches, or the like) at which to perform a higher priority network search after the successful registration on the second network resulting from performing the roaming network selection procedure when the UE 120 is roaming. Here, after the successful registration on the second network, the UE 120 may perform the higher priority network search according to the configured periodicity. In this way, the UE 120 may attempt to register on a higher priority network after initially registering on the second network as a result of performing the roaming network selection procedure.

In some aspects, the UE 120 may be operating in an automatic network selection mode. That is, the UE 120 may perform the above-described operations automatically (for example, without user intervention). Alternatively, in some aspects, the UE 120 may be operating in a manual network selection mode. In such instances, the UE 120 may receive the indication that the condition is associated with the first network, and may provide, for display network selection information associated with a set of networks. In some aspects, for a given network in the set of networks, the network selection information includes an indication that the given network accommodates inbound roamers. In such an example, the UE 120 may perform a network selection procedure based at least in part on user input that indicates a network selected by the user.

Figure 4 is a diagram illustrating an example process 400 performed, for example, by a UE. The process 400 is an example where the UE (for example, UE 120) performs operations associated with network selection in a service interruption scenario.

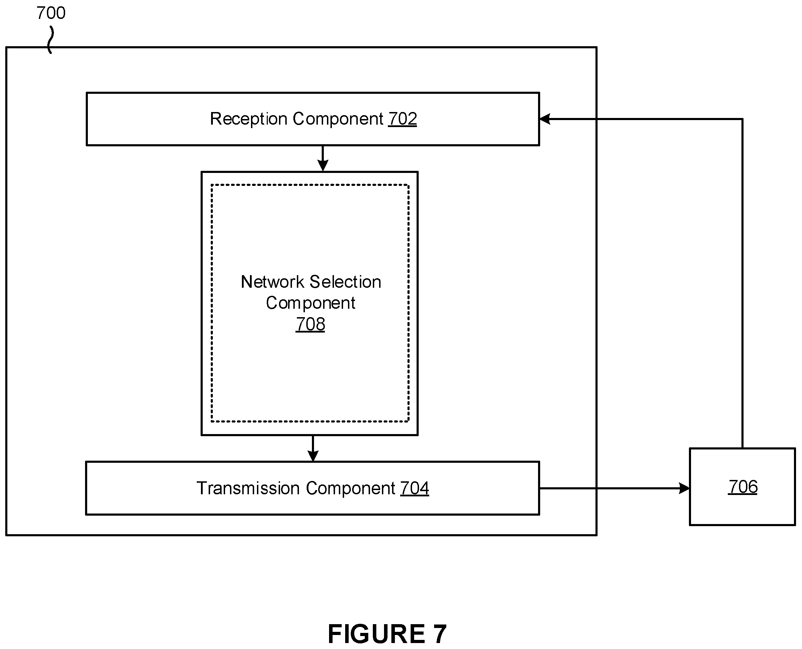

As shown in Figure 4, in some aspects, the process 400 may include receiving an indication that a condition is associated with a first network to which the UE is registered (block 410). For example, the UE (such as by using reception component 702, depicted in Figure 7) may receive an indication that a condition is associated with a first network to which the UE is registered, as described herein.

As further shown in Figure 4, in some aspects, the process 400 may include performing a network selection procedure according to the setting of the configuration parameter based at least in part on receiving the indication (block 420). For example, the UE (such as by using network selection component 708, depicted in Figure 7) may perform a network selection procedure according to the setting of the configuration parameter based at least in part on receiving the indication, as described herein. In some aspects, the network selection procedure includes a legacy network selection procedure. In some aspects, the network selection procedure is associated with roaming information received by or configured on the UE.

The process 400 may include additional aspects, such as any single aspect or any combination of aspects described below or in connection with one or more other processes described elsewhere herein.

In a first additional aspect, the process 300 includes receiving a setting for a configuration parameter associated with a roaming network selection.

In a second additional aspect, in combination with the first aspect, the setting for the configuration parameter indicates that the UE is to perform a legacy network selection procedure before performing a roaming network selection procedure.

In a third additional aspect, alone or in combination with one or more of the first aspect and second aspects, the setting for the configuration parameter indicates that the UE is to perform a roaming network selection procedure without performing a legacy network selection procedure.

In a fourth additional aspect, alone or in combination with one or more of the first through third aspects, the setting for the configuration parameter indicates that the UE is to perform a legacy network selection procedure before performing a roaming network selection procedure when the UE is in a home network, and that the UE is to perform the roaming network selection procedure without performing the legacy network selection procedure when the UE is in a visited network.

In a fifth additional aspect, alone or in combination with one or more of the first through fourth aspects, the setting for the configuration parameter indicates that the UE is to perform a roaming network selection procedure without performing a legacy network selection procedure when the UE is in a home network, and that the UE is to perform the legacy network selection procedure before performing the roaming network selection procedure when the UE is in a visited network.

In a sixth additional aspect, alone or in combination with one or more of the first through fifth aspects, the setting for the configuration parameter is stored in mobile equipment of the UE or in a universal subscriber identity module (USIM) of the UE.

In a seventh additional aspect, alone or in combination with one or more of the first through sixth aspects, the setting for the configuration parameter is preconfigured in mobile equipment of the UE.

In an eighth additional aspect, alone or in combination with one or more of the first through seventh aspects, the setting for the configuration parameter is preconfigured in a USIM of the UE.

In a ninth additional aspect, alone or in combination with one or more of the first through eighth aspects, the setting for the configuration parameter is received by the UE during a UE parameters update procedure.

In a tenth additional aspect, alone or in combination with one or more of the first through ninth aspects, the setting for the configuration parameter is received by the UE during a steering of roaming procedure.

In an eleventh additional aspect, alone or in combination with one or more of the first through tenth aspects, the setting for the configuration parameter is received by the UE in a deregistration request message associated with the first network.

In a twelfth additional aspect, alone or in combination with one or more of the first through eleventh aspects, the setting for the configuration parameter is received by the UE during a generic UE configuration update procedure.

In a thirteenth additional aspect, alone or in combination with one or more of the first through twelfth aspects, the legacy network selection procedure is performed without considering the first network as a network selection candidate.

In a fourteenth additional aspect, alone or in combination with one or more of the first through thirteenth aspects, the process 400 includes camping on a second network when a result of performing the legacy network selection procedure is a successful registration on the second network.

In a fifteenth additional aspect, alone or in combination with one or more of the first through fourteenth aspects, the process 400 includes performing a higher priority network search after the successful registration on the second network.

In a sixteenth additional aspect, alone or in combination with one or more of the first through fifteenth aspects, the higher priority network search is performed without considering the first network as a network selection candidate when the UE is roaming.

In a seventeenth additional aspect, alone or in combination with one or more of the first through sixteenth aspects, the higher priority network search is performed according to a periodicity associated with performing the higher priority network search.

In an eighteenth additional aspect, alone or in combination with one or more of the first through seventeenth aspects, the higher priority network search is performed without considering terrestrial radio access technologies of the first network as a network selection candidate when the UE is roaming.

In a nineteenth additional aspect, alone or in combination with one or more of the first through eighteenth aspects, further including detecting a trigger to perform an additional network selection procedure, the trigger being one of a switch-off of the UE or a loss of coverage for the UE, and performing the legacy network selection procedure based at least in part on detecting the trigger and without considering the first network as a network selection candidate or, in some aspects, without considering terrestrial radio access technologies of the first network as a network selection candidate.

In a twentieth additional aspect, alone or in combination with one or more of the first through nineteenth aspects, performing the network selection procedure includes performing a roaming network selection procedure.

In a twenty-first additional aspect, alone or in combination with one or more of the first through twentieth aspects, the roaming network selection procedure is performed based at least in part on the UE being unable to register on another network when performing a legacy network selection procedure.

In a twenty-second additional aspect, alone or in combination with one or more of the first through twenty-first aspects, performing the roaming network selection procedure includes identifying a set of networks that have indicated accommodation for inbound roamers, and attempting to register on at least one network of the set of networks that have indicated accommodation for inbound roamers.

In a twenty-third additional aspect, alone or in combination with one or more of the first through twenty-second aspects, the at least one network includes a network that is on a list of networks forbidden to the UE.

In a twenty-fourth additional aspect, alone or in combination with one or more of the first through twenty-third aspects, the set of networks includes multiple networks, and an order in which the UE attempts to register on the at least one network is based at least in part on roaming information associated with the set of networks.

In a twenty-fifth additional aspect, alone or in combination with one or more of the first through twenty-fourth aspects, the roaming information is preconfigured on the UE.

In a twenty-sixth additional aspect, alone or in combination with one or more of the first through twenty-fifth aspects, the roaming information is received by the UE via over-the-air signaling.

In a twenty-seventh additional aspect, alone or in combination with one or more of the first through twenty-sixth aspects, the roaming information is received with the indication that the condition is associated with the first network.

In a twenty-eighth additional aspect, alone or in combination with one or more of the first through twenty-seventh aspects, the roaming information is received with an indication that a network is able accommodate inbound roamers.

In a twenty-ninth additional aspect, alone or in combination with one or more of the first through twenty-eighth aspects, the roaming information includes an ordered list of the set of networks.

In a thirtieth additional aspect, alone or in combination with one or more of the first through twenty-ninth aspects, the roaming information includes a weighted list of the set of networks and the order in which the UE attempts to register on the at least one network is based at least in part on a weighted random draw using the weighted list.

In a thirty-first additional aspect, alone or in combination with one or more of the first through thirtieth aspects, the roaming information includes information indicating capacity each of the set of networks and the order in which the UE attempts to register on the at least one network is based at least in part on a weighted random draw using the information indicating the capacity of each of the set of networks as a weight list.

In a thirty-second additional aspect, alone or in combination with one or more of the first through thirty-first aspects, the set of networks includes multiple networks, and an order in which the UE attempts to register on the at least one network is randomized.

In a thirty-third additional aspect, alone or in combination with one or more of the first through thirty-second aspects, the set of networks includes multiple networks, and an order in which the UE attempts to register on the at least one network is based on a UE implementation.

In a thirty-fourth additional aspect, alone or in combination with one or more of the first through thirty-third aspects, the process 400 includes camping on a second network when a result of performing the roaming network selection procedure is a successful registration on the second network.

In a thirty-fifth additional aspect, alone or in combination with one or more of the first through thirty-fourth aspects, the process 400 includes refraining from removing the second network from a list of networks forbidden to the UE when the second network is on a list of networks forbidden to the UE.

In a thirty-sixth additional aspect, alone or in combination with one or more of the first through thirty-fifth aspects, the process 400 includes refraining from performing a higher priority network search when the UE is roaming until receiving a notification that the condition no longer is associated with the first network when the second network is a visited network.

In a thirty-seventh additional aspect, alone or in combination with one or more of the first through thirty-sixth aspects, the process 400 includes performing a higher priority network search when the UE is roaming according to a periodicity associated with performing the higher priority network search when the UE is roaming.

In a thirty-eighth additional aspect, alone or in combination with one or more of the first through thirty-seventh aspects, the process 400 includes performing a higher priority network search after the successful registration on the second network when the UE is roaming, where the higher priority network search is performed without considering the first network as a network selection candidate.

In a thirty-ninth additional aspect, alone or in combination with one or more of the first through thirty-eighth aspects, the process 400 includes performing a higher priority network search after the successful registration on the second network when the UE is roaming, where the higher priority network search is performed without considering terrestrial radio access technologies of the first network as a network selection candidate.

In a fortieth additional aspect, alone or in combination with one or more of the first through thirty-ninth aspects, the process 400 includes detecting a trigger to perform an additional network selection procedure, the trigger being one of a switch-off of the UE or a loss of coverage for the UE, and performing the roaming network selection procedure based at least in part on detecting the trigger.

In a forty-first additional aspect, alone or in combination with one or more of the first through fortieth aspects, the UE is in an automatic network selection mode.

In a forty-second additional aspect, alone or in combination with one or more of the first through forty-first aspects the condition is a disaster condition and the roaming information is disaster roaming information to be used in association with performing the network selection procedure based at least in part on the indication indicating that the disaster condition is associated with the first network.

Figure 5 is a diagram illustrating an example process 500 performed, for example, by a UE. The process 500 is an example where the UE (for example, UE 120) performs operations associated with network selection in a service interruption scenario.

As shown in Figure 5, in some aspects, the process 500 may include receiving an indication that a condition is associated with a network to which the UE is registered (block 510). For example, the UE (such as by using reception component 702, depicted in Figure 7) may receive an indication that a condition is associated with a network to which the UE is registered, as described herein.

As further shown in Figure 5, in some aspects, the process 500 may include providing, for display and based at least in part on receiving the indication, network selection information associated with a set of networks, where, for a given network in the set of networks, the network selection information includes an indication that the given network accommodates inbound roamers (block 520). For example, the UE (such as by using network selection component 708 , depicted in Figure 7) may provide, for display and based at least in part on receiving the indication, network selection information associated with a set of networks, where, for a given network in the set of networks, the network selection information includes an indication that the given network accommodates inbound roamers, as described herein. In some aspects, the network selection may additionally or alternatively include an indication that the condition is associated with the given network.

The process 500 may include additional aspects, such as any single aspect or any combination of aspects described below or in connection with one or more other processes described elsewhere herein.

In a first additional aspect, the process 500 includes performing a network selection procedure based at least in part on user input indicating a network, of the set of networks, selected by a user.

In a second additional aspect, alone or in combination with the first aspect, the UE is in a manual network selection mode.

Figure 6 is a diagram illustrating an example process 600 performed, for example, by a BS. The process 600 is an example where the bs (for example, BS110) performs operations associated with network selection in a service interruption scenario.

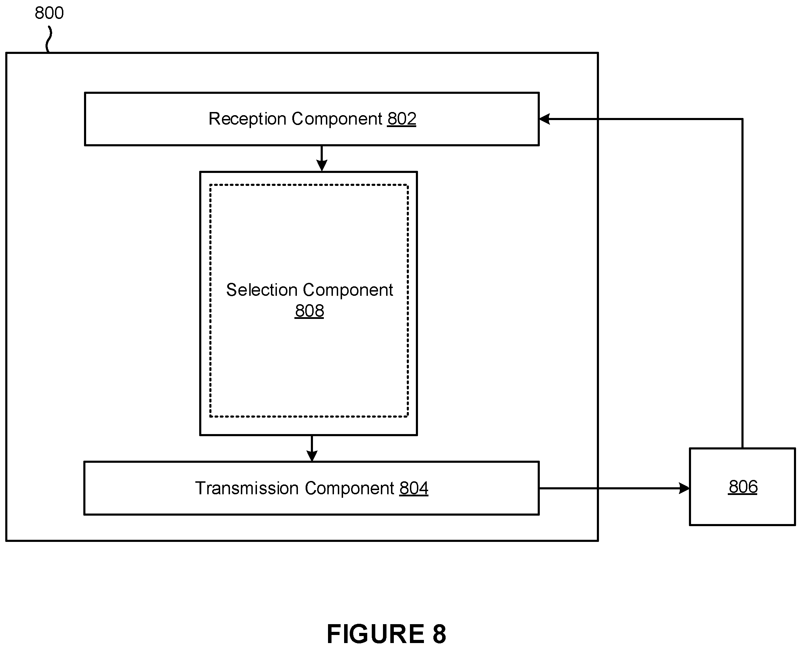

As shown in Figure 6, in some aspects, the process 600 may include selecting a setting for a configuration parameter associated with roaming network selection by a UE (block 610). For example, the BS (such as by using selection component 808, depicted in Figure 8) may select a setting for a configuration parameter associated with roaming network selection by a UE, as described herein.

As further shown in Figure 6, in some aspects, the process 600 may include transmitting an indication of the setting for the configuration parameter to the UE (block 620). For example, the BS (such as by using transmission component 804, depicted in Figure 8) may transmit an indication of the setting for the configuration parameter to the UE, as described herein.

The process 600 may include additional aspects, such as any single aspect or any combination of aspects described below or in connection with one or more other processes described elsewhere herein.

In a first additional aspect, the setting for the configuration parameter indicates that the UE is to perform a legacy network selection procedure before performing a roaming network selection procedure.

In a second additional aspect, alone or in combination with the first aspect, the setting for the configuration parameter indicates that the UE is to perform a roaming network selection procedure without performing a legacy network selection procedure.

In a third additional aspect, alone or in combination with one or more of the first and second aspects, the setting for the configuration parameter indicates that the UE is to perform a legacy network selection procedure before performing a roaming network selection procedure when the UE is in a home network, and that the UE is to perform the roaming network selection procedure without performing the legacy network selection procedure when the UE is in a visited network.

In a fourth additional aspect, alone or in combination with one or more of the first through third aspects, the setting for the configuration parameter indicates that the UE is to perform a roaming network selection procedure without performing a legacy network selection procedure when the UE is in a home network, and that the UE is to perform the legacy network selection procedure before performing the roaming network selection procedure when the UE is in a visited network.

In a fifth additional aspect, alone or in combination with one or more of the first through fourth aspects, the setting for the configuration parameter is transmitted to the UE during a UE parameters update procedure.

In a sixth additional aspect, alone or in combination with one or more of the first through fifth aspects, the setting for the configuration parameter is transmitted to the UE during a steering of roaming procedure.

In a seventh additional aspect, alone or in combination with one or more of the first through sixth aspects, the setting for the configuration parameter is transmitted to the UE in a deregistration request message associated with a network to which the UE is registered.

In an eighth additional aspect, alone or in combination with one or more of the first through seventh aspects, the setting for the configuration parameter is transmitted to the UE during a generic UE configuration procedure.

Figure 7 is a block diagram of an example apparatus 700 for wireless communication. The apparatus 700 may be a UE, or a UE may include the apparatus 700. In some aspects, the apparatus 700 includes a reception component 702 and a transmission component 704, which may be in communication with one another (for example, via one or more buses and/or one or more other components). As shown, the apparatus 700 may communicate with another apparatus 706 (such as a UE, a base station, or another wireless communication device) using the reception component 702 and the transmission component 704. As further shown, the apparatus 700 may include a network selection component 708, among other examples.

In some aspects, the apparatus 700 may be configured to perform one or more operations described herein. Additionally, or alternatively, the apparatus 700 may be configured to perform one or more processes described herein, such as process 400 of Figure 4, process 500 of Figure 5, or a combination thereof. In some aspects, the apparatus 700 and/or one or more components shown in Figure 7 may include one or more components of the UE described above in connection with Figure 2. Additionally, or alternatively, one or more components shown in Figure 7 may be implemented within one or more components described above in connection with Figure 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 702 may receive communications, such as reference signals, control information, data communications, or a combination thereof, from the apparatus 706. The reception component 702 may provide received communications to one or more other components of the apparatus 700. In some aspects, the reception component 702 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 706. In some aspects, the reception component 702 may include one or more antennas, a demodulator, a MIMO detector, a receive processor, a controller/processor, a memory, or a combination thereof, of the UE described above in connection with Figure 2.

The transmission component 704 may transmit communications, such as reference signals, control information, data communications, or a combination thereof, to the apparatus 706. In some aspects, one or more other components of the apparatus 706 may generate communications and may provide the generated communications to the transmission component 704 for transmission to the apparatus 706. In some aspects, the transmission component 704 may perform signal processing on the generated communications (such as filtering, amplification, modulation, digital-to-analog conversion, multiplexing, interleaving, mapping, or encoding, among other examples), and may transmit the processed signals to the apparatus 706. In some aspects, the transmission component 704 may include one or more antennas, a modulator, a transmit MIMO processor, a transmit processor, a controller/processor, a memory, or a combination thereof, of the UE described above in connection with Figure 2. In some aspects, the transmission component 704 may be co-located with the reception component 702 in a transceiver.

The reception component 702 may receive a setting for a configuration parameter associated with a roaming network selection. The reception component 702 may receive an indication that a condition is associated with a first network to which the UE is registered. The network selection component 708 may perform a network selection procedure according to the setting of the configuration parameter based at least in part on receiving the indication.

The network selection component 708 may perform a higher priority network search after the successful registration on the second network, where the higher priority network search is performed without considering the first network as a network selection candidate when the UE is roaming.

The network selection component 708 may perform a higher priority network search after the successful registration on the second network, where the higher priority network search is performed without considering terrestrial radio access technologies of the first network as a network selection candidate when the UE is roaming.

The network selection component 708 may refrain from removing the second network from a list of networks forbidden to the UE when the second network is on a list of networks forbidden to the UE.

The network selection component 708 may refrain from performing a higher priority network search when the UE is roaming until receiving a notification that the condition no longer is associated with the first network when the second network is a visited network.

The network selection component 708 may perform a higher priority network search after the successful registration on the second network when the UE is roaming, where the higher priority network search is performed without considering the first network as a network selection candidate.

The network selection component 708 may perform a higher priority network search after the successful registration on the second network when the UE is roaming, where the higher priority network search is performed without considering terrestrial radio access technologies of the first network as a network selection candidate.

The network selection component 708 may detect a trigger to perform an additional network selection procedure, the trigger being one of a switch-off of the UE or a loss of coverage for the UE.

The network selection component 708 may perform the roaming network selection procedure based at least in part on detecting the trigger.

The reception component 702 may receive an indication that a condition is associated with a network to which the UE is registered. The network selection component 708 may provide, for display and based at least in part on receiving the indication, network selection information associated with a set of networks where, for a given network in the set of networks, the network selection information includes an indication that either the condition is associated with the given network or that the given network accommodates inbound roamers.

The network selection component 708 may perform a network selection procedure based at least in part on user input indicating a network, of the set of networks, selected by a user.

Figure 8 is a block diagram of an example apparatus 800 for wireless communication. The apparatus 800 may be a BS, or a BS may include the apparatus 800. In some aspects, the apparatus 800 includes a reception component 802 and a transmission component 804, which may be in communication with one another (for example, via one or more buses and/or one or more other components). As shown, the apparatus 800 may communicate with another apparatus 806 (such as a UE, a base station, or another wireless communication device) using the reception component 802 and the transmission component 804. As further shown, the apparatus 800 may include a selection component 808, among other examples.

In some aspects, the apparatus 800 may be configured to perform one or more operations described herein. Additionally, or alternatively, the apparatus 800 may be configured to perform one or more processes described herein, such as process 600 of Figure 6. In some aspects, the apparatus 800 and/or one or more components shown in Figure 8 may include one or more components of the BS described above in connection with Figure 2. Additionally, or alternatively, one or more components shown in Figure 8 may be implemented within one or more components described above in connection with Figure 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 802 may receive communications, such as reference signals, control information, data communications, or a combination thereof, from the apparatus 806. The reception component 802 may provide received communications to one or more other components of the apparatus 800. In some aspects, the reception component 802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 806. In some aspects, the reception component 802 may include one or more antennas, a demodulator, a MIMO detector, a receive processor, a controller/processor, a memory, or a combination thereof, of the BS described above in connection with Figure 2.

The transmission component 804 may transmit communications, such as reference signals, control information, data communications, or a combination thereof, to the apparatus 806. In some aspects, one or more other components of the apparatus 806 may generate communications and may provide the generated communications to the transmission component 804 for transmission to the apparatus 806. In some aspects, the transmission component 804 may perform signal processing on the generated communications (such as filtering, amplification, modulation, digital-to-analog conversion, multiplexing, interleaving, mapping, or encoding, among other examples), and may transmit the processed signals to the apparatus 806. In some aspects, the transmission component 804 may include one or more antennas, a modulator, a transmit MIMO processor, a transmit processor, a controller/processor, a memory, or a combination thereof, of the BS described above in connection with Figure 2. In some aspects, the transmission component 804 may be co-located with the reception component 802 in a transceiver.

The selection component 808 may select a setting for a configuration parameter associated with roaming network selection by a UE. The transmission component 804 may transmit an indication of the setting for the configuration parameter to the UE.

As used herein, the term "component" is intended to be broadly construed as hardware, firmware, or a combination of hardware and software. As used herein, a processor is implemented in hardware, firmware, or a combination of hardware and software. As used herein, the phrase "based on" is intended to be broadly construed to mean "based at least in part on." As used herein, satisfying a threshold may refer to a value being greater than the threshold, greater than or equal to the threshold, less than the threshold, less than or equal to the threshold, equal to the threshold, or not equal to the threshold, among other examples. As used herein, a phrase referring to "at least one of" a list of items refers to any combination of those items, including single members. As an example, "at least one of: a, b, or c" is intended to cover: a, b, c, a-b, a-c, b-c, and a-b-c.

Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (for example, related items, unrelated items, or a combination of related and unrelated items), and may be used interchangeably with "one or more." Where only one item is intended, the phrase "only one" or similar language is used. Also, as used herein, the terms "has," "have," "having," and similar terms are intended to be open-ended terms. Further, as used herein, the term "or" is intended to be inclusive when used in a series and may be used interchangeably with "and/or," unless explicitly stated otherwise (for example, if used in combination with "either" or "only one of").

The various illustrative logics, logical blocks, modules, circuits and algorithm processes described in connection with the aspects disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. A processor also may be implemented as a combination of computing devices, for example, a combination of a DSP and a microprocessor, a plurality of microprocessors, one or more microprocessors in conjunction with a DSP core, or any other such configuration. In some aspects, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Aspects of the subject matter described in this specification also can be implemented as one or more computer programs (such as one or more modules of computer program instructions) encoded on a computer storage media for execution by, or to control the operation of, a data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of any device as implemented.

Certain features that are described in this specification in the context of separate aspects also can be implemented in combination in a single aspect. Conversely, various features that are described in the context of a single aspect also can be implemented in multiple aspects separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted can be incorporated in the example processes that are schematically illustrated. For example, one or more additional operations can be performed before, after, simultaneously, or between any of the illustrated operations. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Additionally, other aspects are within the scope of the following claims.

## Claims

1. A method of wireless communication performed by an apparatus of a user equipment, UE, comprising:
receiving (410) an indication that a condition is associated with a first network to which the UE is registered, wherein the condition is a disaster condition; and
performing (420) a network selection procedure based at least in part on receiving the indication,
wherein the network selection procedure comprises a legacy network selection procedure, and
wherein the network selection procedure is associated with roaming information received by or configured on the UE,
wherein performing the network selection procedure includes performing a roaming network selection procedure after performing the legacy network selection procedure,
wherein performing the roaming network selection procedure comprises:
identifying a set of networks that have indicated accommodation for inbound roamers; and
attempting to register on at least one network of the set of networks that have indicated accommodation for inbound roamers.

2. The method of claim 1, further comprising camping on a second network when a result of performing the legacy network selection procedure is a successful registration on the second network.

3. The method of claim 2, further comprising performing a higher priority network search after the successful registration on the second network, wherein the higher priority network search is performed according to a periodicity associated with performing the higher priority network search.

4. The method of claim 1, wherein the roaming network selection procedure is performed based at least in part on the UE being unable to register on another network when performing the legacy network selection procedure.

5. The method of claim 1, wherein the at least one network includes a network that is on a list of networks forbidden to the UE.

6. The method of claim 1, wherein the set of networks includes multiple networks, and an order in which the UE attempts to register on the at least one network is based at least in part on the roaming information associated with the set of networks.

7. The method of claim 6, wherein the roaming information is preconfigured on the UE.

8. The method of claim 6, wherein the roaming information is received by the UE via over-the-air signaling.

9. The method of claim 6, wherein the roaming information includes an ordered list of the set of networks.

10. The method of claim 1, wherein the set of networks includes multiple networks, and an order in which the UE attempts to register on the at least one network is randomized.

11. The method of claim 1, further comprising camping on a second network when a result of performing the roaming network selection procedure is a successful registration on the second network, further comprising one of the following:
refraining from removing the second network from a list of networks forbidden to the UE when the second network is on a list of networks forbidden to the UE, or
performing a higher priority network search when the UE is roaming according to a periodicity associated with performing the higher priority network search when the UE is roaming.

12. The method of claim 1, wherein the UE is in an automatic network selection mode.

13. The method of claim 1, wherein the roaming information is disaster roaming information to be used in association with performing the network selection procedure based at least in part on the indication indicating that the disaster condition is associated with the first network.

14. An apparatus of a user equipment, UE, for wireless communication, comprising:
means for receiving (702) an indication that a condition is associated with a first network to which the UE is registered, wherein the condition is a disaster condition; and
means for performing (708) a network selection procedure based at least in part on receiving the indication, wherein the network selection procedure comprises a legacy network selection procedure, and wherein the network selection procedure is associated with roaming information received by or configured on the UE,
wherein performing the network selection procedure includes performing a roaming network selection procedure after performing the legacy network selection procedure,
wherein performing the roaming network selection procedure comprises:
identifying a set of networks that have indicated accommodation for inbound roamers; and
attempting to register on at least one network of the set of networks that have indicated accommodation for inbound roamers.

15. The apparatus of claim 14, further comprising means for performing a method according to any of claims 2 to 13.

## Patentansprüche

1. Verfahren zur drahtlosen Kommunikation, das von einer Vorrichtung eines Benutzergeräts, UE, durchgeführt wird, umfassend:
Empfangen (410) einer Anzeige, dass eine Bedingung mit einem ersten Netzwerk assoziiert ist, bei dem das UE registriert ist, wobei die Bedingung eine Katastrophenbedingung ist; und
Durchführen (420) einer Netzwerkauswahlprozedur basierend zumindest teilweise auf dem Empfangen der Anzeige,
wobei die Netzwerkauswahlprozedur eine veraltete Netzwerkauswahlprozedur umfasst, und
wobei die Netzwerkauswahlprozedur mit Roaming-Information assoziiert ist, die von dem UE empfangen oder auf dem UE konfiguriert wird,
wobei das Durchführen der Netzwerkauswahlprozedur das Durchführen einer Roaming-Netzwerkauswahlprozedur nach dem Durchführen der veralteten Netzwerkauswahlprozedur beinhaltet,
wobei das Durchführen der Roaming-Netzwerkauswahlprozedur umfasst:
Identifizieren eines Satzes von Netzwerken, die Unterbringung für eingehende Roamer angezeigt haben; und
Versuchen, sich bei mindestens einem Netzwerk des Satzes von Netzwerken zu registrieren, die Unterbringung für eingehende Roamer angezeigt haben.

2. Verfahren nach Anspruch 1, ferner umfassend das Verweilen bei einem zweiten Netzwerk, wenn ein Ergebnis des Durchführens der veralteten Netzwerkauswahlprozedur eine erfolgreiche Registrierung bei dem zweiten Netzwerk ist.

3. Verfahren nach Anspruch 2, ferner umfassend das Durchführen einer Netzwerksuche mit höherer Priorität nach der erfolgreichen Registrierung bei dem zweiten Netzwerk, wobei die Netzwerksuche mit höherer Priorität gemäß einer Periodizität durchgeführt wird, die mit dem Durchführen der Netzwerksuche mit höherer Priorität assoziiert ist.

4. Verfahren nach Anspruch 1, wobei die Roaming-Netzwerkauswahlprozedur basierend zumindest teilweise darauf durchgeführt wird, dass das UE nicht in der Lage ist, sich bei einem anderen Netzwerk zu registrieren, wenn die veraltete Netzwerkauswahlprozedur durchgeführt wird.

5. Verfahren nach Anspruch 1, wobei das mindestens eine Netzwerk ein Netzwerk beinhaltet, das sich auf einer Liste von Netzwerken befindet, die dem UE verboten sind.

6. Verfahren nach Anspruch 1, wobei der Satz von Netzwerken mehrere Netzwerke beinhaltet und eine Reihenfolge, in der das UE versucht, sich bei dem mindestens einen Netzwerk zu registrieren, zumindest teilweise auf der Roaming-Information basiert, die mit dem Satz von Netzwerken assoziiert ist.

7. Verfahren nach Anspruch 6, wobei die Roaming-Information auf dem UE vorkonfiguriert ist.

8. Verfahren nach Anspruch 6, wobei die Roaming-Information von dem UE über Over-the-Air-Signalisierung empfangen wird.

9. Verfahren nach Anspruch 6, wobei die Roaming-Information eine geordnete Liste des Satzes von Netzwerken beinhaltet.

10. Verfahren nach Anspruch 1, wobei der Satz von Netzwerken mehrere Netzwerke beinhaltet und eine Reihenfolge, in der das UE versucht, sich bei dem mindestens einen Netzwerk zu registrieren, randomisiert ist.

11. Verfahren nach Anspruch 1, ferner umfassend das Verweilen bei einem zweiten Netzwerk, wenn ein Ergebnis des Durchführens der Roaming-Netzwerkauswahlprozedur eine erfolgreiche Registrierung bei dem zweiten Netzwerk ist, ferner umfassend eines der Folgenden:
Unterlassen des Entfernens des zweiten Netzwerks aus einer Liste von Netzwerken, die dem UE verboten sind, wenn sich das zweite Netzwerk auf einer Liste von Netzwerken befindet, die dem UE verboten sind, oder
Durchführen einer Netzwerksuche mit höherer Priorität, wenn das UE gemäß einer Periodizität, die mit dem Durchführen der Netzwerksuche mit höherer Priorität assoziiert ist, roamt, wenn das UE roamt.

12. Verfahren nach Anspruch 1, wobei sich das UE in einem automatischen Netzwerkauswahlmodus befindet.

13. Verfahren nach Anspruch 1, wobei die Roaming-Information Katastrophen-Roaming-Information ist, die in Verbindung mit dem Durchführen der Netzwerkauswahlprozedur basierend zumindest teilweise auf der Anzeige zu verwenden ist, die anzeigt, dass die Katastrophenbedingung mit dem ersten Netzwerk assoziiert ist.

14. Vorrichtung eines Benutzergeräts, UE, zur drahtlosen Kommunikation, umfassend:
Mittel zum Empfangen (702) einer Anzeige, dass eine Bedingung mit einem ersten Netzwerk assoziiert ist, bei dem das UE registriert ist, wobei die Bedingung eine Katastrophenbedingung ist; und
Mittel zum Durchführen (708) einer Netzwerkauswahlprozedur basierend zumindest teilweise auf dem Empfangen der Anzeige, wobei die Netzwerkauswahlprozedur eine veraltete Netzwerkauswahlprozedur umfasst, und wobei die Netzwerkauswahlprozedur mit Roaming-Information assoziiert ist, die von dem UE empfangen oder auf dem UE konfiguriert wird,
wobei das Durchführen der Netzwerkauswahlprozedur das Durchführen einer Roaming-Netzwerkauswahlprozedur nach dem Durchführen der veralteten Netzwerkauswahlprozedur beinhaltet,
wobei das Durchführen der Roaming-Netzwerkauswahlprozedur umfasst:
Identifizieren eines Satzes von Netzwerken, die Unterbringung für eingehende Roamer angezeigt haben; und
Versuchen, sich bei mindestens einem Netzwerk des Satzes von Netzwerken zu registrieren, die Unterbringung für eingehende Roamer angezeigt haben.

15. Vorrichtung nach Anspruch 14, ferner umfassend Mittel zum Durchführen eines Verfahrens nach einem der Ansprüche 2 bis 13.

## Revendications

1. Un procédé de communications sans fil réalisé par un appareil d'un équipement utilisateur, UE, comprenant :
la réception (410) d'une indication qu'une condition est associée à un premier réseau avec lequel l'UE est enregistré, dans lequel la condition est une condition de catastrophe ; et
la réalisation (420) d'une procédure de sélection de réseau sur la base au moins en partie de la réception de l'indication,
dans lequel la procédure de sélection de réseau comprend une procédure de sélection de réseau héritée, et
dans lequel la procédure de sélection de réseau est associée à des informations d'itinérance reçues par ou configurées sur l'UE,
dans lequel la réalisation de la procédure de sélection de réseau comprend la réalisation d'une procédure de sélection de réseau d'itinérance après la réalisation de la procédure de sélection de réseau héritée,
dans lequel la réalisation de la procédure de sélection de réseau d'itinérance comprend :
l'identification d'un ensemble de réseaux qui ont proposé un hébergement pour des itinérants entrants ; et
la tentative de s'enregistrer sur au moins un réseau de l'ensemble de réseaux qui ont indiqué un hébergement pour des itinérants entrants.

2. Le procédé selon la revendication 1, comprenant en outre le séjour sur un second réseau lorsqu'un résultat de la réalisation de la procédure de sélection de réseau héritée est un enregistrement réussi sur le second réseau.

3. Le procédé selon la revendication 2, comprenant en outre la réalisation d'une recherche de réseau de priorité supérieure après l'enregistrement réussi sur le second réseau, dans lequel la recherche de réseau de priorité supérieure est réalisée selon une périodicité associée à la réalisation de la recherche de réseau de priorité supérieure.

4. Le procédé selon la revendication 1, dans lequel la procédure de sélection de réseau d'itinérance est réalisée sur la base au moins en partie de l'UE qui est incapable de s'enregistrer sur un autre réseau lors de la réalisation de la procédure de sélection de réseau héritée.

5. Le procédé selon la revendication 1, dans lequel l'au moins un réseau inclut un réseau qui est sur une liste de réseaux interdits à l'UE.

6. Le procédé selon la revendication 1, dans lequel l'ensemble de réseaux comprend plusieurs réseaux, et un ordre dans lequel l'UE tente de s'enregistrer sur l'au moins un réseau est basé au moins en partie sur les informations d'itinérance associées à l'ensemble de réseaux.

7. Le procédé selon la revendication 6, dans lequel les informations d'itinérance sont préconfigurées sur l'UE.

8. Le procédé selon la revendication 6, dans lequel les informations d'itinérance sont reçues par l'UE via une signalisation par voie hertzienne.

9. Le procédé selon la revendication 6, dans lequel les informations d'itinérance incluent une liste ordonnée de l'ensemble de réseaux.

10. Le procédé selon la revendication 1, dans lequel l'ensemble de réseaux comprend de multiples réseaux, et un ordre dans lequel l'UE tente de s'enregistrer sur l'au moins un réseau est rendu aléatoire.

11. Le procédé selon la revendication 1, comprenant en outre le séjour sur un second réseau lorsqu'un résultat de la réalisation de la procédure de sélection de réseau d'itinérance est un enregistrement réussi sur le second réseau, comprenant en outre une parmi ce qui suit :
la non-suppression du second réseau d'une liste de réseaux interdits à l'UE lorsque le second réseau est sur une liste de réseaux interdits à l'UE, ou
la réalisation d'une recherche de réseau de priorité supérieure lorsque l'UE est en itinérance selon une priorité associée à la réalisation de la recherche de réseau de priorité supérieure lorsque l'UE est en itinérance.

12. Le procédé selon la revendication 1, dans lequel l'UE est dans un mode de sélection de réseau automatique.

13. Le procédé selon la revendication 1, dans lequel les informations d'itinérance sont des informations d'itinérance en cas de catastrophe, à utiliser en association avec la réalisation de la procédure de sélection de réseau sur la base au moins en partie de l'indication indiquant que la condition de catastrophe est associée au premier réseau.

14. Un appareil d'un équipement utilisateur, UE, pour la communication sans fil, comprenant :
un moyen pour recevoir (702) une indication qu'une condition est associée à un premier réseau avec lequel l'UE est enregistré, dans lequel la condition est une condition de catastrophe ; et
un moyen pour réaliser (708) une procédure de sélection de réseau sur la base au moins en partie de la réception de l'indication, dans lequel la procédure de sélection de réseau comprend une procédure de sélection de réseau héritée, et dans lequel la procédure de sélection de réseau est associée à des informations d'itinérance reçues par ou configurées sur l'UE,
dans lequel la réalisation de la procédure de sélection de réseau comprend la réalisation d'une procédure de sélection de réseau d'itinérance après la réalisation de la procédure de sélection de réseau héritée,
dans lequel la réalisation de la procédure de sélection de réseau d'itinérance comprend :
l'identification d'un ensemble de réseaux qui ont proposé un hébergement pour des itinérants entrants ; et
la tentative de s'enregistrer sur au moins un réseau de l'ensemble de réseaux qui ont indiqué un hébergement pour des itinérants entrants.

15. L'appareil selon la revendication 14, comprenant en outre des moyens pour réaliser un procédé selon l'une des revendications 2 à 13.
